# EUROPEAN PATENT SPECIFICATION

(11) **EP 1 434 960 B1**
(45) Date of publication and mention of the grant of the patent: **31.05.2006**
(21) Application number: 02774935.7
(22) Date of filing: 11.10.2002
(51) Int. Cl.: F16L 3/04

(54) **FASTENER**
BEFESTIGUNGSELEMENT
FIXATION

(30) Priority: 11.10.2001 GB 0124425; 09.11.2001 GB 0126962
(43) Date of publication of application: 07.07.2004
(73) Proprietor: Arbuckle, Wesley, Glasgow G4 0LF (GB)
(72) Inventor: Arbuckle, Wesley, Glasgow G4 0LF (GB)
(74) Representative: Murnane, Graham John
(86) International application number: PCT/GB2002/004610
(87) International publication number: WO 2003/033954

(56) References cited:
- US-A- 3 951 367
- US-A- 4 260 122
- US-A- 4 609 170
- US-A- 5 743 061
- US-B1- 6 276 644

## Description

The present invention relates to a fastener used particularly, but not exclusively, for fixing cables, pipes and conduits of differing dimensions to surfaces such as walls and ceilings formed of, for example, brick, concrete, stone, plasterboard, timber, plastics and metals. The fastener may also be used as an alternative to nails, screws or hooks (and the like), as a fixing on a surface, and to fix a number of cables (and the like) to surfaces.

Conventionally, cables and the like are held to a wall or ceiling by fitting an attachment around the cable and screwing or nailing the attachment to the wall or ceiling. This is time consuming and requires a number of components and tools.

Document US-B-6,276,644, which is considered to represent the closest prior art, discloses a fastener with two legs being biased apart by biasing means in a pre-installation condition. Other designs of fasteners are known from documents US-A-4,609,170, US-A-5,743,061, US-A-4,260,122 and US-A-3,951,367, respectively. In light of these documents it is an object of the present invention to provide a fastener of the above mentioned type having a higher gripping force when being installed in a hole.

According to the present invention there is provided a fastener according to claim 1.

In particularly preferred forms of the invention, the legs and the biasing means are integrally formed, for example from spring steel strip, and the legs are provided with one or more spikes angled to resist removal of the fastener from the hole.

The present invention also provides a method of attaching an article to a wall or ceiling, the method comprising:
providing a fastener as defined above;
drilling a hole in the wall or ceiling;
positioning the fastener over the article; and
inserting the fastener into the hole.

Typically, the article is a cable, pipe or the like. The hole may be made in a solid wall including brick, concrete, stone or timber, or a panel such as plasterboard, plastics and metals.

Other preferred features and advantages of the invention will be apparent from the following description and claims.

One embodiment of the fastener of the present invention will now be described, by way of example only, with reference to the accompanying drawings, in which:
Fig. 1 is a schematic perspective view of a first fastener not forming part of the present invention;
Figs 2a to 2c are schematic part cross-sectional elevational views of the steps in connecting a cable to a wall using the fastener of Fig. 1;
Figs 3 to 5 are schematic side views of alternative fasteners not forming part of the present invention;
Fig 6A is a side view of an embodiment of the fastener of the present invention in a free state; and
Figs 6B and 6C are a plan and side view, respectively, of the fastener of Fig 6A in a compressed state.

Referring to the drawings, a fastener 10 is formed of one piece of 0.3 mm spring steel with a tempered finish. The fastener 10 has two legs 12a and 12b and a biasing means 14.

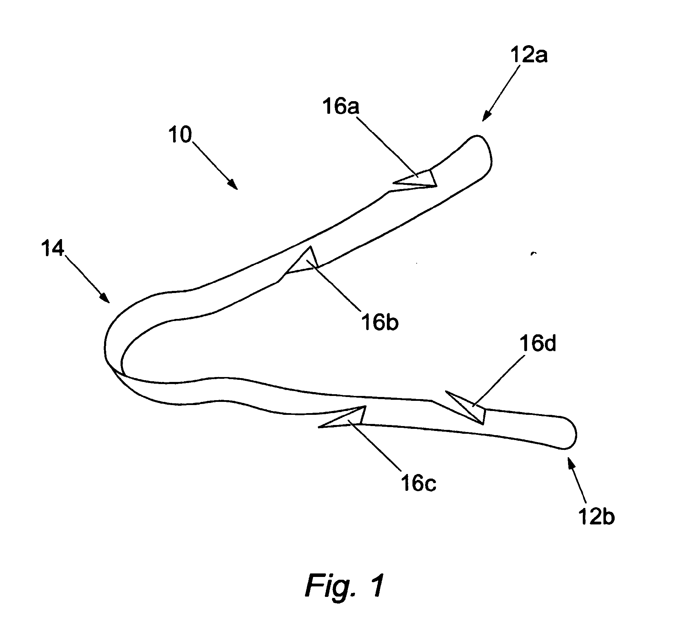

The biasing means 14 is interposed between the two legs 12a and 12b and biases the two legs 12a and 12b apart (Fig. 1 illustrates the two legs 12a and 12b in the fully biased apart, pre-installation, condition).

Each of the two legs 12a and 12b has a respective pair of securing spikes 16a, 16b and 16c, 16d in the form of triangular barbs which are formed from the material of the legs 12a and 12b. The barbs 16a-d are directed generally towards the biasing means 14.

The biasing means 14 is formed integrally with the two legs 12a and 12b and the biasing force is supplied by a pre-tensioning in the material which forms the fastener 10, such that when the two legs 12a and 12b are brought together by a user, the bias force urges the two legs 12a and 12b apart.

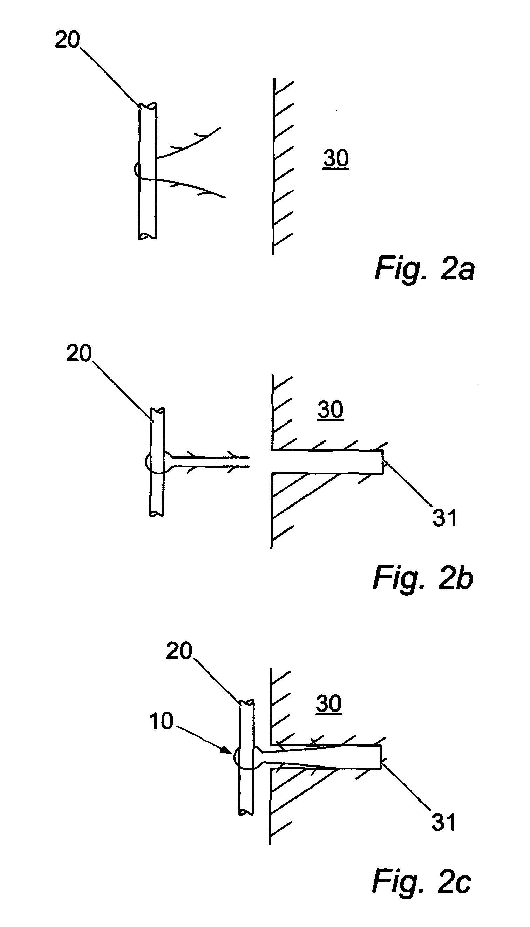

The fastener 10 is also adapted to fit around a cable 20 and in use (Figs 2a-c), the cable 20 is fitted to a wall, ceiling or the like by placing the fastener 10 around the cable 20 (Fig. 2a), drilling a hole 31 in the wall 30 and a user squeezing the two legs 12a and 12b together (Fig. 2b). The two legs 12a and 12b of the fastener 10 are then inserted into the hole 31 and released.

As seen in Fig. 2c, the bias force then urges the two legs 12a and 12b apart and the legs 12a and 12b engage the interior of the hole 31. The barbs 16a-d also engage the interior surface in an anchor-like manner, and because of the orientation of the barbs 16a-d (i.e. the barbs 16a-d facing towards the biasing means 14) any force to try to remove the fastener 10 from the hole, merely causes the barbs 16a-d to anchor further into the hole, thus securing the fastener 10 even more securely.

The fastener 10, formed of steel, has particular application in securing cable 20 specifically used in fire safety system applications but can also be used for normal domestic and industrial applications. The fastener 10 can be used in corrosive, hazardous, indoor and outdoor environments. No tools are required to fit the fastener 10 (once a hole has been drilled), and the installation is fast, easy, reliable and secure.

The fastener 10 can be made by a progression pressing tool with a multi-change application to enable different sizes of fastener to be produced to accommodate different diameters of cable, or a number of cables.

The fastener 10 is plated with bright zinc, however, different types of finish can be used, for example coloured finishes.

In a specific form, the design and orientation of the barbs 16a-d is such that a force of 9 to 13 kg is required to pull the fastener 10 from the hole 31.

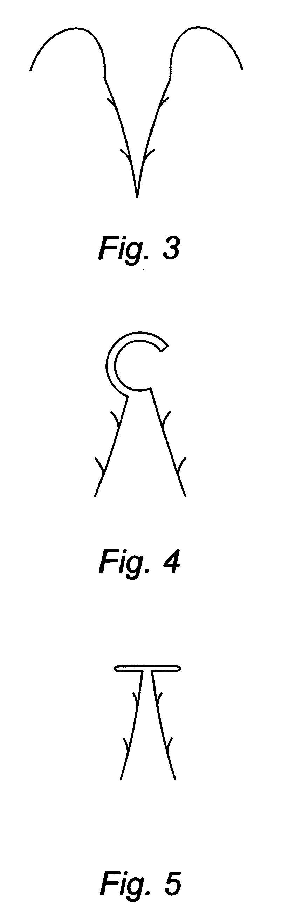

Referring to Figs 3 to 5, there are illustrated alternative fasteners 10 which operate in a similar way to the first fastener described above (and which is illustrated in Figs 1 and 2).

Referring to Fig. 3, there is shown a second fastener. The fastener 110 includes a single element bent to form two legs 112a and 112b and having cable receiving means 150a and 150b respectively attached to the free ends of each of the legs 112a and 112b. The element is bent at location 140 and the bending of the element provides the biasing means 114, which biases the legs 112a and 112b apart. The legs 112a and 112b also include barbs which operate in a similar way as described in the first embodiment. In alternative embodiments, only one cable receiving means (150a, for example) may be provided and the legs 112a and 112b may be formed from two or more separate elements joined together in such a manner that their respective free ends are biased apart.

Referring to Fig. 4, there is shown a third fastener. The fastener 210 includes a single element bent to form two legs 212a and 212b and to form a hook 250 positioned between the two legs 212a and 212b. The bending of the element provides the biasing means which biases the legs 212a and 212b apart. The legs 212a and 212b also include barbs which operate in a similar way as described in the first embodiment. In an alternative embodiment, the legs 212a and 212b and the hook 250 may be formed from two or more separate elements joined together in such a manner that their respective free ends are biased apart.

Referring to Fig. 5, there is shown a fourth fastener. The fastener 310 includes a single element bent to form two legs 312a and 312b and a flattened head 350 positioned between the two legs 312a and 312b. The bending of the element provides the biasing means which biases the legs 312a and 312b apart. The legs 312a and 312b also include barbs which operate in a similar way as described in the first embodiment. In an alternative embodiment, the legs 312a and 312b and the flattened head 350 may be formed from two or more separate elements joined together in such a manner that their respective free ends are biased apart. The flattened head 350 is suitable for securing panels or other planar articles to a wall or ceiling.

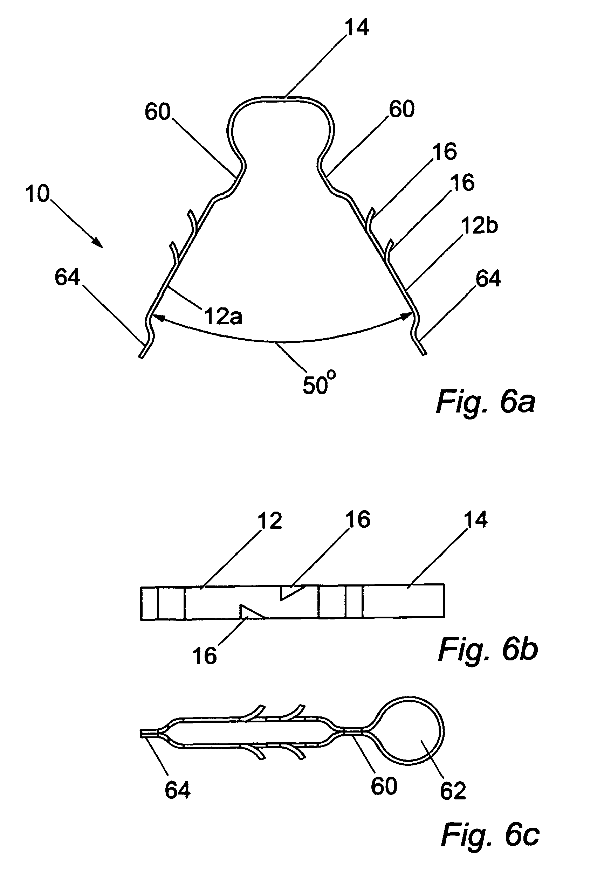

Fig. 6 shows an embodiment of the fastener of the present invention. It will be noted that the legs 12 are formed with cooperating inward portions 60 which, in the compressed state, help to define a circular passage 62 for a cable. The legs 12 are also formed with cooperating inward portions 64 at their distal ends. The portions 60, 64 serve to define a minimum spacing between the legs 12 in the compressed state, which can be chosen to match a desired hole diameter, and also to provide additional resilience to the action of the spikes 16.

Modifications and improvements may be made to the foregoing without departing from the present invention. For example, the biasing means and the two legs may not be integrally formed but may be connected in various other ways; whilst the biasing force results from the nature of the material used (i.e. spring steel), the biasing force may comprise a separate spring or the like; and it will be appreciated by a person skilled in the art that the barbs are optional features and the fastener will secure into the hole, with or without the barbs. Materials other than steel may be used, for example the fastener may be an integral plastic moulding, or a moulded plastics element provided with a metallic spring and metal spikes.

## Claims

1. A fastener (10) for use in securing articles to walls or ceilings, the fastener (10) including an element having two legs (12a, 12b), and a biasing means (14), the legs (12a, 12b) being biased apart by the biasing means (14) in a pre-installation condition and the legs (12a, 12b) capable of being brought together to allow the fastener to be installed into a hole in a wall or ceiling, wherein, when installed, the biasing force supplied by the biasing means (14) urges the legs (12a, 12b) against the interior of the hole, such that the fastener (10) is held in position, **characterised in that** the legs (12a, 12b) are formed with cooperating inward portions (60, 64) which serve to define a minimum spacing between the legs (12a, 12b) in the compressed state.

2. A fastener (10) according to claim 1, in which the element and the biasing means (14) are integral and the element is formed of a single piece of material.

3. A fastener (10) according to claim 2, in which said single piece of material is shaped and dimensioned to accommodate a cable by fitting around at least part of the circumference of the cable.

4. A fastener (10) according to any preceding claim for use in corrosive or hazardous environments.

5. A fastener (10) according to any preceding claim, in which the biasing means (14) is a spring.

6. A fastener (10) according to any preceding claim, in which the biasing force supplied by the biasing means (14) results from the physical properties of the element itself.

7. A fastener (10) according to any preceding claim, further including at least one securing spike (16) positioned to anchor into the hole to further secure the fastener (10) in the hole.

8. A fastener (10) according to claim 7, in which the spike (16) is integrally formed from the element.

9. A fastener (10) according to claim 7 or 8, in which there are a number of spikes (16) and the spikes are angled such that a force applied to try to remove the element from the hole results in the spikes (16) digging further into the interior of the hole.

10. A fastener (10) according to any of claims 7 to 9, in which the design and orientation of the spikes (16) is such that a force of 9 to 13 kg is required to pull the fastener (10) from the hole.

11. A fastener (10) according to any preceding claim, which is formed of steel.

12. A fastener (10) according to claim 11 for use with cables in fire systems.

13. A fastener (10) according to claim 11, formed of spring steel.

14. A fastener (10) according to claim 13, formed of 0.3 mm spring steel.

15. A fastener (10) according to any of claims 12 to 14, in which the steel has a tempered finish.

16. A fastener (10) according to any of claims 12 to 14, in which the fastener (10) is zinc plated.

17. A fastener (10) according to any of claims 11 to 14, in which a coloured finish is applied to the fastener (10).

18. A fastener (10) according to any preceding claim, the fastener (10) being adapted to accommodate different diameters of cable and capable of accommodating a number of cables.

19. A method of attaching an article to a wall or ceiling, the method comprising:
providing a fastener (10) in accordance with any preceding claim;
drilling a hole in the wall or ceiling;
positioning the fastener (10) over the article; and
inserting the fastener (10) into the hole.

20. A method according to claim 19, in which the article is a cable, pipe or the like.

21. A method according to claim 19 or 20, in which the hole is made in a solid wall including brick, concrete, stone or timber, or a panel such as plasterboard, plastics and metals.

## Patentansprüche

1. Ein Verbindungsstück (10) zur Verwendung bei der Sicherung von Gegenständen an Wänden oder Decken, wobei das Verbindungsstück (10) ein Element mit zwei Schenkeln (12a, 12b) und ein Vorspannmittel (14) umfasst, wobei die Schenkel (12a, 12b) von dem Vorspannmittel (14) in einer Vorinstallationsstellung auseinander vorgespannt werden und die Schenkel (12a, 12b) zusammen gebracht werden können, damit das Verbindungsstück in einem Loch in einer Wand oder Decke installiert werden kann, wobei nach der Installation die von dem Vorspannmittel (14) zugeführte Vorspannkraft die Schenkel (12a, 12b) gegen das Innere des Lochs treibt, so dass das Verbindungsstück (10) in Position gehalten wird, **dadurch gekennzeichnet, dass** die Schenkel (12a, 12b) mit zusammenarbeitenden, nach innen gerichteten Abschnitten (60, 64) gebildet sind, die dazu dienen, zwischen den Schenkeln (12a, 12b) im komprimierten Zustand einen Mindestzwischenraum zu definieren.

2. Verbindungsstück (10) gemäß Anspruch 1, wobei das Element und das Vorspannmittel (14) integral sind und das Element aus einem einzelnen Stück Material gebildet ist.

3. Verbindungsstück (10) gemäß Anspruch 2, wobei das einzelne Stück Material so ausgebildet und bemessen ist, dass es ein Kabel unterbringt, indem es um zumindest einen Teil des Umfangs des Kabels passt.

4. Verbindungsstück (10) gemäß einem der vorhergehenden Ansprüche zur Verwendung in korrodierenden oder gefährlichen Umgebungen.

5. Verbindungsstück (10) gemäß einem der vorhergehenden Ansprüche, wobei das Vorspannmittel (14) eine Feder ist.

6. Verbindungsstück (10) gemäß einem der vorhergehenden Ansprüche, wobei sich die von dem Vorspannmittel (14) zugeführte Vorspannkraft aus den physikalischen Eigenschaften des Elements selbst ergibt.

7. Verbindungsstück (10) gemäß einem der vorhergehenden Ansprüche, das ferner zumindest einen sichernden Dorn (16) umfasst, der so positioniert ist, dass er sich in dem Loch verankert, um das Verbindungsstück (10) weiter in dem Loch zu sichern.

8. Verbindungsstück (10) gemäß Anspruch 7, wobei der Dorn (16) integral aus dem Element gebildet ist.

9. Verbindungsstück (10) gemäß Anspruch 7 oder 8, wobei eine Anzahl an Dornen (16) vorhanden sind und die Dorne abgewinkelt sind, so dass eine aufgebrachte Kraft, um zu versuchen, das Element aus dem Loch zu entfernen, darin resultiert, dass sich die Dorne (16) weiter in das Innere des Lochs eingraben.

10. Verbindungsstück (10) gemäß einem der Ansprüche 7 bis 9, wobei das Design und die Ausrichtung der Dorne (16) derart sind, dass eine Kraft von 9 bis 13 kg erforderlich ist, um das Verbindungsstück (10) aus dem Loch zu ziehen.

11. Verbindungsstück (10) gemäß einem der vorhergehenden Ansprüche, das aus Stahl gebildet ist.

12. Verbindungsstück (10) gemäß Anspruch 11 zur Verwendung mit Kabeln in Feuersystemen.

13. Verbindungsstück (10) gemäß Anspruch 11, das aus Federstahl gebildet ist.

14. Verbindungsstück (10) gemäß Anspruch 13, das aus 0,3 mm dickem Federstahl gebildet ist.

15. Verbindungsstück (10) gemäß einem der Ansprüche 12 bis 14, wobei der Stahl ein angelassenes Finish aufweist.

16. Verbindungsstück (10) gemäß einem der Ansprüche 12 bis 14, wobei das Verbindungsstück (10) verzinkt ist.

17. Verbindungsstück (10) gemäß einem der Ansprüche 11 bis 14, wobei ein farbiges Finish auf das Verbindungsstück (10) aufgetragen wird.

18. Verbindungsstück (10) gemäß einem der vorhergehenden Ansprüche (10), wobei das Verbindungsstück angepasst ist, um unterschiedliche Kabeldurchmesser unterzubringen, und eine Anzahl an Kabeln unterbringen kann.

19. Ein Verfahren zur Befestigung eines Gegenstandes an einer Wand oder Decke, wobei das Verfahren Folgendes beinhaltet:
Bereitstellen eines Verbindungsstücks (10) gemäß einem der vorhergehenden Ansprüche;
Bohren eines Lochs in die Wand oder Decke;
Positionieren des Verbindungsstücks (10) über dem Gegenstand; und
Einfügen des Verbindungsstücks (10) in das Loch.

20. Verfahren gemäß Anspruch 19, wobei der Gegenstand ein Kabel, ein Rohr oder dergleichen ist.

21. Verfahren gemäß Anspruch 19 oder 20, wobei das Loch in einer soliden Wand, einschließlich Backstein, Beton, Stein oder Balken, oder einer Platte wie etwa Gipskartonwand, Kunststoffen und Metallen geschaffen wird.

## Revendications

1. Une fixation (10) destinée à être utilisée pour assujettir des articles à des murs ou des plafonds, la fixation (10) comprenant un élément ayant deux pattes (12a, 12b), et un moyen de décalage (14), les pattes (12a, 12b) étant décalées à l'écart l'une de l'autre par le moyen de décalage (14) dans une condition de pré-installation et les pattes (12a, 12b) pouvant être rassemblées pour permettre à la fixation d'être installée dans un trou dans un mur ou un plafond, dans lequel, lorsqu'elle est installée, la force de décalage fournie par le moyen de décalage (14) pousse les pattes (12a, 12b) contre l'intérieur du trou, de sorte que la fixation (10) est maintenue en position, **caractérisée en ce que** les pattes (12a, 12b) sont formées avec des portions vers l'intérieur coopérantes (60, 64) qui servent à définir un espacement minimum entre les pattes (12a, 12b) dans l'état comprimé.

2. Une fixation (10) selon la revendication 1, dans laquelle l'élément et le moyen de décalage (14) sont solidaires et l'élément est formé d'une seule pièce de matériau.

3. Une fixation (10) selon la revendication 2, dans laquelle ladite seule pièce de matériau est configurée et dimensionnée pour accommoder un câble en s'adaptant autour d'au moins une partie de la circonférence du câble.

4. Une fixation (10) selon n'importe quelle revendication précédente destinée à être utilisée dans des environnements corrosifs ou dangereux.

5. Une fixation (10) selon n'importe quelle revendication précédente, dans laquelle le moyen de décalage (14) est un ressort.

6. Une fixation (10) selon n'importe quelle revendication précédente, dans laquelle la force de décalage fournie par le moyen de décalage (14) résulte des propriétés physiques de l'élément lui-même.

7. Une fixation (10) selon n'importe quelle revendication précédente, comprenant de plus au moins une pointe d'assujettissement (16) positionnée pour s'ancrer dans le trou pour assujettir plus avant la fixation (10) dans le trou.

8. Une fixation (10) selon la revendication 7, dans laquelle la pointe (16) est formée de façon solidaire à partir de l'élément.

9. Une fixation (10) selon la revendication 7 ou la revendication 8, dans laquelle il y a un certain nombre de pointes (16) et les pointes sont en biais de sorte qu'une force appliquée pour essayer de retirer l'élément du trou résulte en ce que les pointes (16) s'enfoncent plus avant dans l'intérieur du trou.

10. Une fixation (10) selon n'importe lesquelles des revendications 7 à 9, dans laquelle le modèle et l'orientation des pointes (16) sont tels qu'une force de 9 à 13 kg est requise pour tirer la fixation (10) du trou.

11. Une fixation (10) selon n'importe quelle revendication précédente, laquelle est formée en acier.

12. Une fixation (10) selon la revendication 11 destinée à être utilisée avec des câbles dans des réseaux d'incendie.

13. Une fixation (10) selon la revendication 11, formée en acier à ressort.

14. Une fixation (10) selon la revendication 13, formée en acier à ressort de 0,3 mm.

15. Une fixation (10) selon n'importe lesquelles des revendications 12 à 14, dans laquelle l'acier a une finition trempée.

16. Une fixation (10) selon n'importe lesquelles des revendications 12 à 14, dans laquelle la fixation (10) est recouverte de zinc.

17. Une fixation (10) selon n'importe lesquelles des revendications 11 à 14, dans laquelle une finition en couleur est appliquée sur la fixation (10).

18. Une fixation (10) selon n'importe quelle revendication précédente, la fixation (10) étant adaptée pour accommoder des diamètres différents de câble et pouvant accommoder un certain nombre de câbles.

19. Une méthode d'attache d'un article à un mur ou un plafond, la méthode comportant :
fournir une fixation (10) conformément à n'importe quelle revendication précédente ;
percer un trou dans le mur ou le plafond ;
positionner la fixation (10) par-dessus l'article ; et
insérer la fixation (10) dans le trou.

20. Une méthode selon la revendication 19, dans laquelle l'article est un câble, un tuyau ou analogue.

21. Une méthode selon la revendication 19 ou la revendication 20, dans laquelle le trou est pratiqué dans un mur plein comprenant de la brique, du béton, de la pierre ou du bois d'oeuvre, ou un panneau tel que de la plaque de plâtre, du plastique et des métaux.
